(19) **Europäisches Patentamt**

**European Patent Office**

**Office européen des brevets**

(11) Veröffentlichungsnummer: **0 284 811**

**A2**

(12) # EUROPÄISCHE PATENTANMELDUNG

(21) Anmeldenummer: **88103261.9**

(51) Int. Cl.4: **G01N 21/47** , G01N 21/57

(22) Anmeldetag: **03.03.88**

(30) Priorität: **30.03.87 DE 8704679 U**

(43) Veröffentlichungstag der Anmeldung:
**05.10.88 Patentblatt 88/40**

(84) Benannte Vertragsstaaten:
**DE FR GB IT SE**

(71) Anmelder: **Firma Carl Zeiss**

**D-7920 Heidenheim (Brenz)(DE)**

(84) **DE FR IT SE**

(71) Anmelder: **CARL-ZEISS-STIFTUNG trading as CARL ZEISS**

**D-7920 Heidenheim (Brenz)(DE)**

(84) **GB**

(72) Erfinder: **Gerlinger, Hermann, Dr.**
**Köhlerstrasse 25**
**D-7080 Aalen-Ebnat(DE)**
Erfinder: **Hohberg, Gerhard, Dr.**
**Hornbergstrase 13**
**D-7080 Aalen-Dewangen(DE)**
Erfinder: **Schneider, Horst, Dipl.-Ing. (FH)**
**Amselweg 8**
**D-7923 Königsbronn(DE)**

(54) **Messgerät für Oberflächen mit bunten Glanzeffekten.**

(57) Das Meßgerät besteht aus einem frei beweglichen Meßkopf (11), der über Lichtleiter und elektrische Kabel mit einem stationären Grundgerät (12) verbunden ist. Die von der Probe remittierte Strahlung wird gleichzeitig unter drei verschiedenen Winkeln gemessen. Dazu sind im stationären Grundgerät drei Diodenzeilenspektrometer (18a bis 18c) vorhanden. Mit einem vierten Diodenzeilenspektrometer (18d) kann gleichzeitig das Spektrum der die Probe beleuchtenden Strahlung gemessen werden.

Fig.1

## Meßgerät für Oberflächen mit bunten Glanzeffekten

Die Erfindung betrifft ein Meßgerät zur Charakterisierung von Oberflächen mit bunten Glanzeffekten, bestehend aus einer Lichtquelle und mehreren Empfängern.

Oberflächen mit bunten Glanzeffekten liegen z.B. bei Metalleffektlacken, bei irisierenden Oberflächen und bei perlmuttartigen Strukturen vor. Bei derartigen Oberflächen ist nicht nur der Betrag sondern auch die spektrale Verteilung der remittierten Strahlung richtungsabhängig. Aus goniophotometrischen Messungen an solchen Oberflächen ist bekannt, daß zum Feststellen einer ausreichenden Übereinstimmung zwischen Vergleichs-und Meßprobe, Messungen der remittierten Strahlung unter drei verschiedenen Winkeln notwendig sind.

Aus der US-PS 4 479 718 ist ein Meßgerät zur Messung an Metalleffektlacken bekannt, bei der eine Lichtquelle die Oberfläche unter einem Einfallswinkel von 45° beleuchtet. Zur Erfassung der remittierten Strahlung sind drei Detektoren vorgesehen, die mit dem unter einem Winkel von 45° regulär reflektierten Strahl Winkel von 15° , 45° und 110° bilden.

Dieses bekannte Meßgerät hat den Nachteil, daß -wie meist üblich - die Proben zum Meßgerät gebracht und an eine Meßöffnung angelegt werden müssen. Das ist z.B. bei Autokarosserien oder Fassadenverkleidungen nicht möglich.

Der vorliegenden Erfindung liegt daher die Aufgabe zugrunde, ein Meßgerät zu schaffen, mit welchem auch große Oberflächen mit bunten Glanzeffekten gemessen werden können.

Die gestellte Aufgabe wird erfindungsgemäß dadurch gelöst, daß das Meßgerät aus einem frei beweglichen Meßkopf und einem stationären Grundgerät aufgebaut ist, die miteinander über Lichtleiter und elektrische Kabel verbunden sind, daß die Lichtquelle im stationären Meßteil angeordnet ist und daß als Empfänger Diodenzeilenspektrometer im stationären Grundgerät vorgesehen sind, daß der Meßkopf mit einem zylinderförmigem Handgriff und einem henkelförmigen Handgriff ausgeführt ist, wobei letzterer auch zum Aufhängen des Meßkopfes an einer hakenförmigen Aufhängevorrichtung an einem Arbeitsplatz geeignet ist, und daß die Lichtleiter und die elektrischen Kabel durch den zylinderförmigen Handgriff geführt sind.

In einer vorteilhaften Ausführungsform ist im Meßkopf im Beleuchtungsstrahlengang eine Teilerplatte angeordnet. Die an ihr reflektierte Strahlung wird durch einen Lichtleiter zu einem weiteren Diodenzeilenspektrometer im stationären Grundgerät geführt und dort als Vergleichsspektrum aufgenommen.

Weitere Ausgestaltungen der Erfindung gehen aus den Unteransprüchen und den Erläuterungen zu den Figuren hervor.

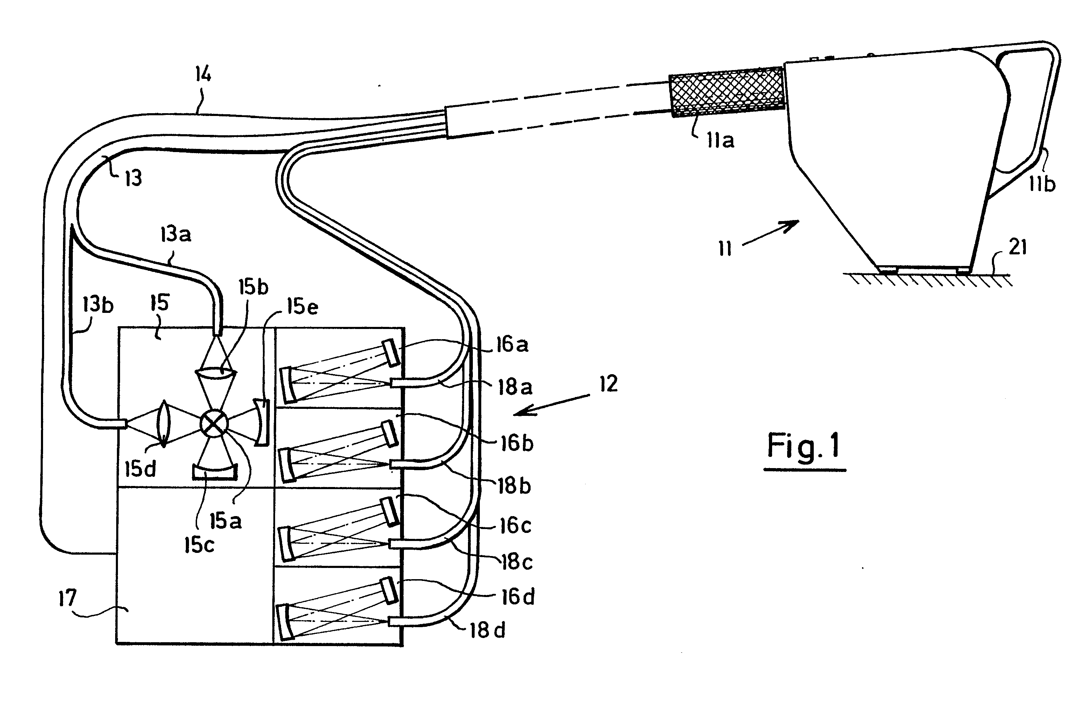

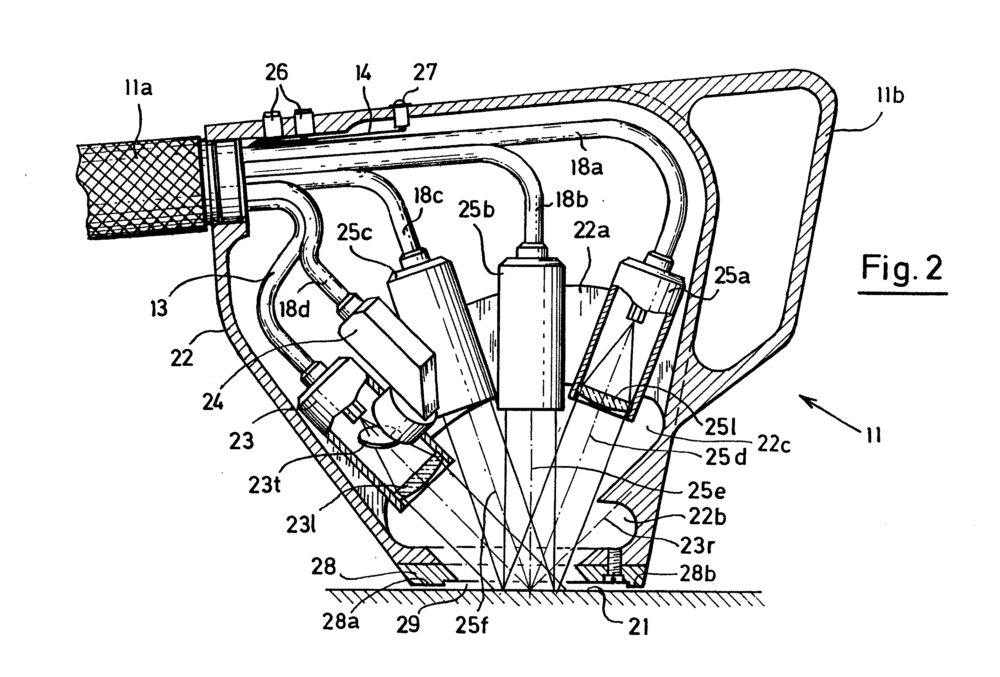

Die Erfindung wird im folgenden anhand der Figuren 1 und 2 näher erläutert. Dabei zeigen

Fig. 1 den Aufbau des gesamten Meßgerätes und

Fig. 2 ein Ausführungsbeispiel für den Meßkopf.

In Figur 1 ist mit (11) der frei bewegliche Meßkopf bezeichnet, welcher über Lichtleiter (13, 18a bis 18d) und elektrische Kabel (14) mit dem stationären Grundgerät (12) verbunden ist. Letzteres besteht aus einem Lampengehäuse (15), in welchem die Lichtquelle (15a) untergebracht ist. Sie wird aus der Elektronik-und Auswerteeinheit (17) mit dem notwendigen Strom versorgt.

Die Lichtquelle (15a) wird von der Linse (15b) auf die Eingangsfläche des Lichtleiters (13 ) abgebildet, durch den Hohlspiegel (15c) wird auch der in die entgegengesetzte Richtung emittierte Strahlungsfluß ausgenutzt. Durch eine weitere Linse (15d) und einen weiteren Hohlspiegel (15e), die um 90° versetzt angeordnet sind, wird die Lichtquelle auf die Eingangsfläche eines zweiten Lichtleiters (13b) abgebildet, welcher mit dem Lichtleiter (13a) zum gemeinsamen Lichtleiter (13) vereinigt ist. Auf diese Weise wird nicht nur der doppelte Strahlungsfluß der Lichtquelle (15a) ausgenutzt, sondern die Beleuchtung der Oberfläche wird relativ unabhängig von Auswanderungen des Brennfleckes der Lichtquelle (15a), wenn die Lichtleiter (13a und 13b) aus zahlreichen Einzelfasern bestehen, welche im Verlauf des gemeinsamen Lichtleiters (13) so gut vermischt werden, daß im Meßkopf (11) eine statistische Verteilung der Einzelfasern vorliegt.

Der Meßkopf (11) hat einen zylinderförmigen Handgriff (11a), durch welchen die Lichtleiter (13, 18a bis 18d) und die elektrischen Kabel (14) hindurch geführt sind. Der Meßkopf (11) hat außerdem einen henkelförmigen Handgriff (11b), mit dem er an einer hakenförmigen Aufhängevorrichtung am Arbeitsplatz aufgehängt werden kann. Durch die zwei Handgriffe (11a, 11b) läßt sich der Meßkopf (11) leicht handhaben, auf die Oberfläche (21) aufsetzen und während der Messung exakt halten.

Figur 2 zeigt - teilweise im Schnitt - die Einzelheiten des Meßkopfes (11). Er besteht aus einem rahmenförmigen Chassis (22) mit einem Montagering (22a), auf welchem die Beleuchtungseinrichtung (23) und die Strahlungsaufnehmer (25a, 25b, 25c) befestigt sind. Der Meßkopf wird durch zwei - nicht gezeichnete - plattenähnliche Gebilde, vor und hinter der Zeichenebene und parallel zu ihr, verschlossen.

In der Beleuchtungseinrichtung (23) ist die Endfläche des Lichtleiters (13) im Brennpunkt der Linse (23l) angeordnet, so daß die Oberfläche (21) annähernd von einem Parallellichtbündel beleuchtet wird. Vor der Linse (23l) befindet sich eine Teilerplatte (23t), von welcher ein Teil der Beleuchtungsstrahlung in den Vergleichsstrahlungsaufnehmer (24) reflektiert wird. In diesem befindet sich ein (nicht gezeichnetes) Umlenkprisma und eine (nicht gezeichnete) Linse, welche die Vergleichsstrahlung auf die (nicht gezeichnete) Anfangsfläche des Lichtleiters (18d) konzentriert. Letzterer führt im stationären Grundgerät (12) zu dem Diodenzeilenspektrometer (16d), mit welchem das Vergleichsspektrum aufgenommen wird, d.h. das Spektrum der Strahlung mit welcher die Oberflächen (21) beaufschlagt wird.

Die von der Oberfläche (21) regulär in die Richtung (23r) reflektierte Strahlung wird - weil sie die Messung beeinträchtigen kann - von den Lichtfallen (22b und 22c) im Chassis (22) aufgenommen. Zur Messung der remittierten Strahlung sind die Strahlungsaufnehmer (25a, 25b und 25c) vorgesehen, deren Achsen (25d, 25e und 25f) mit der Richtung (23r) der regulär reflektierten Strahlung Winkel von z.B. 25°, 45° und 70° bilden.

Die Strahlungsaufnehmer (25a, 25b und 25c) sind gleich aufgebaut; sie besitzen Linsen - beim Strahlungsaufnehmer (25a) mit (25l) bezeichnet - deren Brennpunkte in den Anfangsflächen der Lichtleiter (18a, 18b und 18c) angeordnet sind. Diese Lichtleiter führen im stationären Grundgerät (12) zu den Diodenzeilenspektrometern (16a, 16b und 16c). Diodenzeilenspektrometer sind z.B. aus der DE-OS 3 215 879 bekannt. Durch die Berücksichtigung des mit dem Diodenzeilenspek-trometer (16d) aufgenommenen Vergleichsspek-trums können die absoluten Werte der mit den Diodenzeilenspektrometern (16a, 16b und 16c) auf-genommenen Remissionsspektren ermittelt wer-den. Die Auswertung erfolgt in der Elektronik-und Auswerteeinheit (17) in bekannter Weise.

Als Lichtquelle (15a) kann z.B. eine Halogen-oder Xenonlampe verwendet werden, wobei ein gepulster Betrieb vorteilhaft ist. Besonders günstig ist eine Kurzbogen-Entladungslampe, z.B. XBO 75 der Fa. Osram oder eine Blitzlampe, z.B. BGS 2902Z der Fa. Heimann, welche sehr kurze Meßzeiten ermöglicht.

Der Meßkopf (11) hat eine Öffnung (29), welche zur Messung auf die Oberfläche (21) aufgesetzt wird. Um zu verhindern, daß dabei die Oberfläche verkratzt wird, ist um die Öffnung ein Teil (28) mit Auflageflächen (28a und 28b) aus Kunststoff, z.B. Polyäthylen, angebracht. Außerdem können in der Auflagefläche des Meßkopfes Magnete eingesetzt sein, als Hilfe gegen ein Verwackeln oder Verrutschen während der Messung bei magnetischen oder magnetisierbaren Proben.

In der Nähe des zylinderförmigen Handgriffes (11a) von Meßkopf befinden sich zwei elektrische Taster (26) mit welchen die Messung ausgelöst wird und der Auswerteeinheit (17) angegeben wird, ob der Meßkopf (11) auf eine Vergleichs-oder Meßprobe aufgesetzt ist. Mit einer oder mehreren Anzeigelampen (27) können verschiedene Betriebszustände des Meßgerätes angezeigt werden.

## Ansprüche

1. Meßgerät zur Charakterisierung von Oberflächen mit bunten Glanzeffekten, bestehend aus einer Lichtquelle und mehreren Empfängern, dadurch gekennzeichnet, daß das Meßgerät aus einem frei beweglichen Meßkopf (11) und einem stationären Grundgerät (12) aufgebaut ist, die miteinander über Lichtleiter (13, 18a bis 18c) und elektrische Kabel (14) verbunden sind, daß die Lichtquelle (15a) im stationären Meßteil angeordnet ist, daß als Empfänger Diodenzeilenspektrometer (16a bis 16c) im stationären Grundgerät vorgesehen sind, daß der Meßkopf mit einem zylinderförmigem Handgriff (11a) und einem henkelförmigen Handgriff (11b) ausgeführt ist, wobei letzterer auch zum Aufhängen des Meßkopfes (11) an einer hakenförmigen Aufhängevorrichtung an einem Arbeitsplatz geeignet ist, und daß die Lichtleiter (13, 18a bis 18d) und die elektrischen Kabel (14) durch den zylinderförmigen Handgriff (11a) geführt sind.

2. Meßgerät nach Anspruch 1, dadurch gekennzeichnet, daß im Meßkopf (11) die Achsen (25d, 25e, 25f) der die remittierte Strahlung aufnehmenden Strahlungsaufnehmer (24a, 24b, 24c) zur Mittelachse (23r) der regulär reflektierten Strahlung mit Winkeln von 25°, 45° und 70° angeordnet sind.

3. Meßgerät nach Anspruch 1 oder 2, dadurch gekennzeichnet, daß im Meßkopf (11) im Beleuch-tungsstrahlengang eine Teilerplatte (23t) angeord-net ist und die an ihr reflektierte Strahlung durch einen Lichtleiter (18d) zu einem weiteren Diodenzeilenspektrometer (16d) im stationären Grundgerät (12) geführt ist.

4. Meßgerät nach einem der Ansprüche 1 bis 3, dadurch gekennzeichnet, daß die Auflageflächen (28a und 28b) des Meßkopfes (11) aus Kunststoff sind.

5. Meßgerät nach Anspruch 4, dadurch gekennzeichnet, daß die Auflagefläche (28) des Meßkopfes (11) aus Polyäthylen ist.

6. Meßgerät nach einem der Ansprüche 1 bis 5, dadurch gekennzeichnet, daß der Meßkopf (11) mit Lichtfallen (22b, 22c) für die von der Oberfläche (21) regulär reflektierte·Strahlung ausgebildet ist.

7. Meßgerät nach einem der Ansprüche 1 bis 6, dadurch gekennzeichnet, daß als Lichtquelle (15a) eine Halogen-oder Xenonlampe vorgesehen ist.

8. Meßgerät nach einem der Ansprüche 1 bis 6, dadurch gekennzeichnet, daß als Lichtquelle (15a) eine Blitzlampe vorgesehen ist.

_Fig.1_

0 284 811

Fig. 2

0 284 811